(19) Europäisches Patentamt
European Patent Office
Office européen des brevets

(11) EP 0 642 122 B1

(12) EUROPEAN PATENT SPECIFICATION

(45) Date of publication and mention
of the grant of the patent:
24.11.1999 Bulletin 1999/47

(51) Int Cl.⁶: G11B 7/125, G11B 7/007

(21) Application number: 94306496.4

(22) Date of filing: 02.09.1994

(54) **Method and system for recording information on an optical disk**

Verfahren und System zum Aufzeichnen von Information auf einer optischen Platte

Méthode et système d'enregistrment d'informations sur un disque optique

(84) Designated Contracting States:
DE FR GB

(30) Priority: 03.09.1993 JP 22032293

(43) Date of publication of application:
08.03.1995 Bulletin 1995/10

(73) Proprietors:
• PIONEER ELECTRONIC CORPORATION
Meguro-ku Tokyo-to (JP)
• PIONEER VIDEO CORPORATION
Nakakoma-gun Yamanashi (JP)

(72) Inventors:
• Inoue, Akiyoshi, Pioneer Elec. Co.
Tokorozawa-shi, Saitama-ken (JP)
• Taniguchi, Shoji, Pioneer Elec. Co.
Tokorozawa-shi, Saitama-ken (JP)
• Takahashi, Hiroyuki, Pioneer Elec. Co.
Tokorozawa-shi, Saitama-ken (JP)
• Muramatsu, Eiji, Pioneer Elec. Co.
Tokorozawa-shi, Saitama-ken (JP)
• Murakami, Shigenori
Koufu-shi, Yamanashi-ken (JP)
• Murakami, Toshihiko
Koufu-shi, Yamanashi-ken (JP)

(74) Representative: Brunner, Michael John et al
GILL JENNINGS & EVERY
Broadgate House
7 Eldon Street
London EC2M 7LH (GB)

(56) References cited:
EP-A- 0 259 666          EP-A- 0 345 917
EP-A- 0 430 649          EP-A- 0 504 829
US-A- 5 305 296

## Description

The present invention relates to a recordable optical disc and a recording apparatus therefor, and more particularly to a recordable optical disc and a recording apparatus suitable for recording signal according to CDV (Compact Disc Video) format.

Description of the Prior Art:

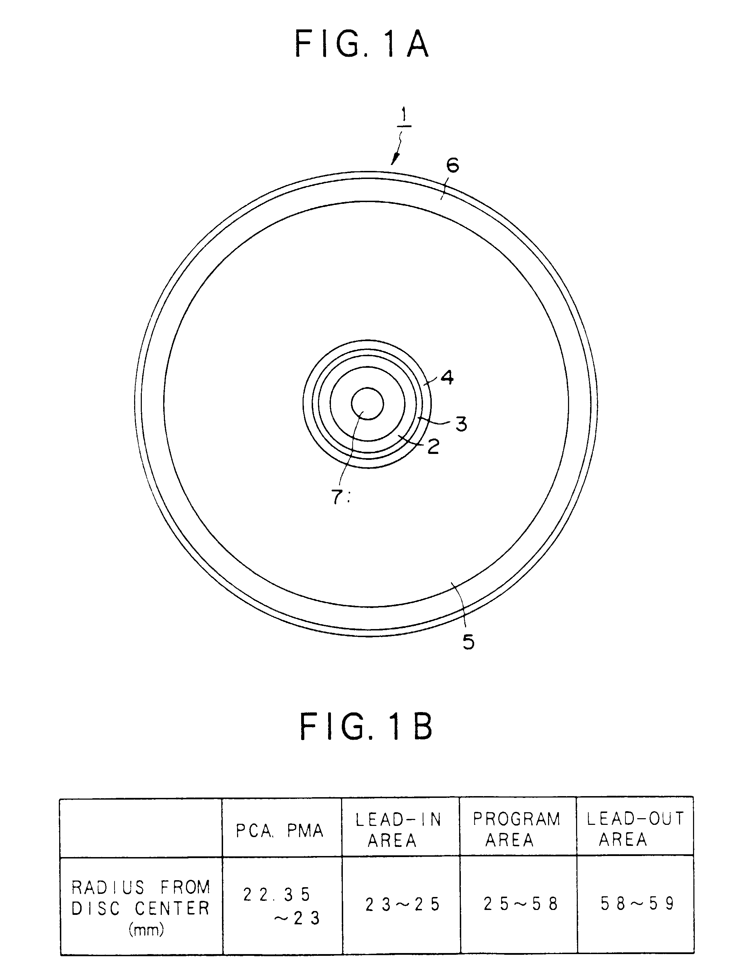

Conventionally, there is CD (Compact Disc), known as a media for reproduction only, on which music information is recorded. There has recently been developed a recordable compact disc (CD-R:Recordable Compact Disc). Recording format of CD-R is generally referred to as "Orange Book", and it is in conformity with recording format of CD. FIGS. 1A and 1B illustrate physical format of CD-R. In CD-R, a lead-in area 4, a program area 5 and a lead-out area 6 are formed from inner circumference of the disc to outer circumference thereof, like the format of CD. In addition, in CD-R, a PCA (Power Calibration Area) 2 and a PMA (Power Memory Area) 3 are provided radially inwardly of the lead-in area 4, as illustrated in FIG. 1.

Recording track on the R-CD is provided with guide groove that is wobbled by the frequency of a carrier of 22.05 kHz which is frequency-modulated by data indicating absolute time information (ATIP: Absolute Time In Pregroove). A laser beam for recording desired information is moved to follow the guide grooves under tracking servo control, and rotational speed of spindle motor which rotates the R-CD is controlled so that the wobbling guide groove pattern has a central frequency of 22.05 kHz. In this manner, tracking servo and spindle-motor servo controls can be effected on unrecorded R-CDs as well as recorded R-CDs.

The PCA 2 is an area where test recording is carried out prior to an actual information recording process, so that the power of the recording laser beam will be optimized for recording desired information in the information recording process. The PCA 2 is composed of a count area and a test area. The count area has a plurality of subareas corresponding respectively to a plurality of subareas of the test area, and each containing a suitable EFM signal recorded therein. Test recording for measuring an optimum recording laser beam power is carried out in the subareas of the test area. One of the subareas of the test area is consumed by a single test recording.

Any subarea of the test area which has once been used by test recording is not available for a next test recording. It is therefore necessary to search for an unused subarea positioned radially inwardly of the used subarea for use in the next test recording. The count area is provided to facilitate the searching process. More specifically, if suitable EFM signals have been recorded in certain subareas of the count area and no EFM signal has been recorded in a subarea next to those subareas, then unrecorded subarea indicates that the corresponding subarea of the test area is available for test recording. Consequently, that corresponding subarea of the test area may be searched for and test recording carried out therein for measuring an optimum recording laser beam power. After an optimum recording laser beam power has been measured in the subarea of the test area, the corresponding subarea of the count area is searched for, and a certain signal (EFM signal) is recorded in that subarea, indicating that test recording has already been conducted in the subarea of the count area.

The PMA 3 is an area for storing a recording history of information successively recorded in the program area. Specifically, start addresses and end addresses of track numbers recorded in the program area, for example, are recorded in the PMA 3 in the same format as the TOC information in the lead-in area.

The recording history of successively recorded information is stored in the PMA 3 for the following reasons: On a partially recorded disc, information may further be recorded in the remaining blank of the program area. Therefore, the information in the PMA 3 cannot be recorded in the lead-in area 4 until the completion of recording of all the desired information is finally indicated. Consequently, information about the tracks that have already been recorded is temporarily stored in the PMA 3. When the user or controller of the disc indicates that no more information will be recorded, the TOC information and a lead-out signal are recorded for the first time. At the time the recording is completed, the TOC information in the PMA 3 is transferred to the lead-in area 4 a plurality of times for improving reliability. The finalized disc (CD-R), on which the recording of all the necessary information is completed, is now in conformity with the CD format, and can be played back by an ordinary playback-only disc player which does not have an ATIP decoder for decoding the ATIP information. Not only the above-mentioned "Orange Book" but Japanese Patent Applications Nos. 3-23595 and 3-193218 disclose details of recording format of CD-R.

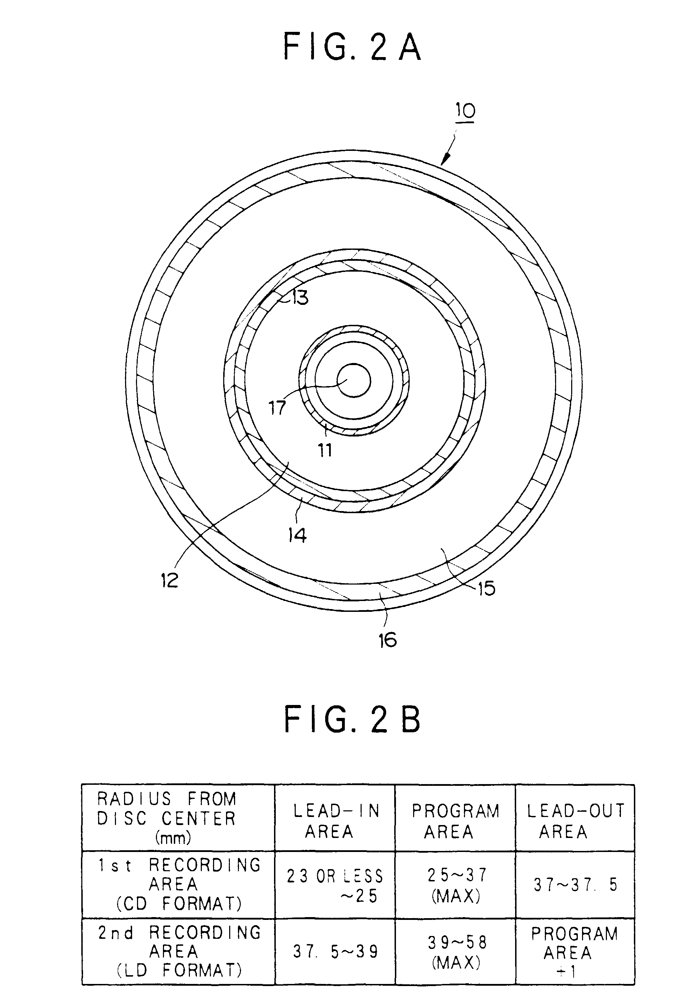

On the other hand, there is CDV (Compact Disc Video), known as application media of CD, which utilizes format of CD and LD (Laser Disc) in combination so as to record both audio and video signals on a unique disc. FIGS. 2A and 2B illustrate basic format of CDV. The CDV roughly includes an audio signal recording area positioned at inner circumferential portion of the disc for recording digital audio information and a video signal recording area positioned at outer circumferential portion of the disc for recording digital audio information and video information. The audio signal recording area includes a first lead-in area 11, a first program area 12 and a first lead-out area 13, and digital audio information for approximately 20 minutes is recorded according to the same format as CD. The video signal recording area includes a second lead-in area 14, a second program area 15 and a second lead-out area 16, and video information and digital audio information for approximately 5 minutes is recorded according to the same format as LD. However, when CDV-format signal is actually recorded on the CD-R, a problem in respect to power of recording light beam takes place due to difference of linear velocity of disc rotation between the audio signal recording area and the video signal recording area. As mentioned above, in CD-R, test recording is performed in the PCA to optimize power of recording light beam. Here, it is assumed that CD-R is divided into a first area (audio signal recording area) and a second area (video signal recording area), and CDV-format signal is recorded on the respective areas. In this case, audio signal is recorded on the first area by linear velocity of 1.2 - 1.4 m/s according to CD format, and therefore optimum recording power determined by the test recording that is conducted in the PCA positioned at inner circumference of the disc is used for recording, and information pits are accurately formed. However, in the second area of CDV format, linear velocity of disc rotation is 11 - 12 m/s, approximately 8 times of that in the first area, because video signal to be recorded has broad frequency band. Therefore, if information is recorded by the optimum recording power that is determined by the test recording in the PCA where disc is rotated at linear velocity 1.2 - 1.4 m/s, recording power becomes relatively insufficient because linear velocity of disc rotation in the second area is much higher than that in the first area. This results in inaccurate or insufficient formation of information pits. Accordingly, in order to perform accurate recording in the second area, it is necessary to determine recording power to be appropriate for the linear velocity of 11 - 12 m/s. However, if test recording is performed under the linear velocity of 11 - 12 m/s in the PCA which is positioned most inner circumference of the disc, the disc has to be rotated at rotation frequency nearly 4000 - 5000 rpm. However, under such a high rotation, in actual, servo control may be unstable and therefore accurate test recording cannot be carried out.

EP-A-0259666 discloses a recordable disc having two recording areas, one for a digital signal, and the other for an FM signal with superimposed digital signal. EP-A-0430649 and EP-A-0504829 both disclose laser power setting devices and methods for optical disc recorders.

It is an object of the present invention to provide a recordable optical disc and a recording apparatus therefor in which information is recorded by optimum recording power determined in accordance with linear velocity of disc rotation.

According to the present invention, there is provided a method of recording information on a recordable optical disc by applying a light beam on the surface thereof, said disc comprising a first recording area and a second recording area the first recording area comprising a test recording area, said method comprising the steps of:

rotating the disc at first linear velocity and determining a first optimum recording power for recording information on the first recording area by a test recording utilizing the test area within the first recording area;
recording information on the first recording area by the first optimum recording power while the disc is rotated at the first linear velocity; characterised by the second recording area comprising a test recording area and the steps of:
rotating the disc at second linear velocity and determining a second optimum recording power for recording information on the second recording area by a test recording utilizing the test area within the second recording area;
recording information on the second recording area by the second optimum recording power while the disc is rotated at the second linear velocity.

According to a further aspect of the present invention, there is provided a system comprising a recordable optical disc and an apparatus for recording information on the recordable optical disc by applying a light beam on the surface thereof, said disc comprising a first recording area on which information is recorded and reproduced while the disc is rotated at a first linear velocity; and a second recording area on which information is recorded and reproduced while the disc is rotated at a second linear velocity, characterised by:

each of the first recording area and the second recording area comprising a test recording area, respectively, and
said apparatus comprising recording power determining means for determining optimum recording power for recording information on the first area by a test recording utilizing the test recording area in the first recording area, and for determining optimum recording power for recording information on the second area by a test recording utilizing the test recording area in the second recording area.

According to the present invention, recording area of CD-R is divided into a first recording area and a second recording area, and PCA is provided in both areas, respectively. An optimum recording power for the first recording area is determined by a test recording carried out within first PCA, and an optimum recording power for the second recording area is determined by the test recording carried out in second PCA. Namely, the optimum recording power is determined in accordance with linear velocity of disc rotation in respective areas of the CDV-format. As a result, suitable information pits may be formed and information may be accurately recorded.

## BRIEF DESCRIPTION OF THE DRAWINGS

FIGS. 1A and 1B illustrate physical recording format of CD-R;
FIGS. 2A and 2B illustrate basic recording format of CDV;
FIG. 3 illustrates recording format of CDV-R disc according to the present invention;
FIG. 4 is a block diagram illustrating a construction of CDV-R recording apparatus according to the present invention;
FIG. 5 is a flowchart showing operation of recording information on a first area of CDV-R; and
FIG. 6 is a flowchart showing operation of recording information on a second area of CDV-R.

A preferred embodiment of the present invention will be described below with reference to the accompanying drawings.

Recordable Optical Disc:

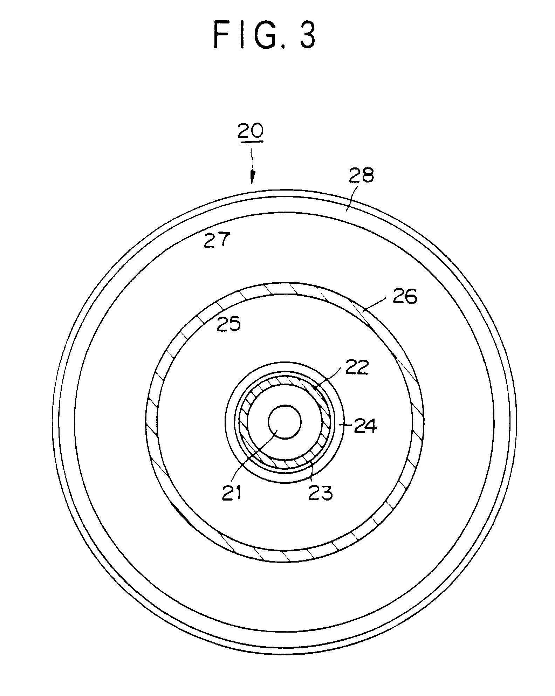

FIG. 3 illustrates physical format of CD-R according to an embodiment of the present invention. The CD-R according to this format will be hereinafter referred to as "CDV-R". In FIG. 3, an optical disc 20 is provided with a first PCA 22, a PMA 23, a lead-in area 24, in the same manner as ordinary CD-R shown in FIG. 1. In addition, in the optical disc 20, the program area shown in FIG. 1 is divided into a first program area 25 and a second program area 27, and a second PCA 26 is provided at the border of the first program area 25 and the second program area 27. Here, an area from the first PCA 22 outwardly to the first program area 25 is defined as "first area". The first area corresponds to the audio signal recording area according to CDV format, and is rotated at linear velocity 1.2 - 1.4 m/s (hereinafter referred to as "first linear velocity"). In addition, the second PCA 26 and the second program area 27 outside of it is defined as "second area". The second area corresponds to the video signal recording area according to CDV format, and is rotated at linear velocity 11 - 12 m/s (hereinafter referred to as "second linear velocity").

As described above, one of the novel feature of the present invention is in that the second PCA 26 is provided in the second area in addition to the PCA (the first PCA) of ordinary CD-R. Namely, the optimum recording power for recording audio information according to CD-format onto the first area is determined on the basis of the test recording carried out in the first PCA 22 under the disc rotation at the linear velocity 1.2 - 1.4 m/s. On the other hand, the optimum recording power for recording video information according to LD-format onto the second area is determined on the basis of the test recording carried out in the second PCA 26 under the disc rotation at the linear velocity 11 - 12 m/s. In other words, information is recorded on respective recording areas by the optimum recording powers determined in the test recordings that are carried out under linear velocities of the respective areas. Accordingly, suitable information pits are formed and information is accurately recorded in both areas.

If radius of the disc from the center thereof is expressed as "r", the linear velocity is expressed as "v" and the rotation number of the disc is expressed as "R", the following equation is satisfied:

$$R = 60 / 2\pi r \times v \; [\text{rpm}] \qquad (1).$$

Accordingly, the more outer circumferential side of the disc the second PCA 26 is provided, the less the rotation speed of the disc may be required. For example, if the second PCA 26 is positioned at area of radius 35 mm and the linear velocity of disc rotation in the second area is decided to be 11.4 m/s, the disc rotation speed obtained from the equation (1) is 3110 [rpm] and test recording can be performed under rotational speed in which servo control is stable.

Next, the actual position of the second PCA 26 will be examined. In view of the above analysis, the second PCA 26 may be positioned everywhere within the second area where disc is rotated by the linear velocity 11 - 12 m/s in theory, and the more outwardly of the disc the second PCA is provided, the smaller the rotation frequency of the disc may be. However, in actual, since signal is recorded according to CDV-format, the second PCA has to be positioned in conformity with CDV-format. According to CDV-format, it is determined that the second lead-in area in the second area must be positioned within a range of 37.5 - 39 mm from the disc center, that the second program area must be positioned in a range of 39 - 58 mm from the disc center and that the second lead-out area must be positioned in a range within 1 mm from the outer circumference of the second program area, as shown in FIG. 2B. Therefore, it is preferable to provide the second PCA in inner circumferential side of the second program area within a range of 37.5- 38 mm from the disc center, or in outer circumferential side of the second lead-in area in a range of more than 59 mm from the disc center. In respect to PMA, a second PMA may be provided within the second area in the same manner as the first PCA, or alternatively the PMA in the first area may also be used for the test recording of the second area.

CDV-R Recording Apparatus:

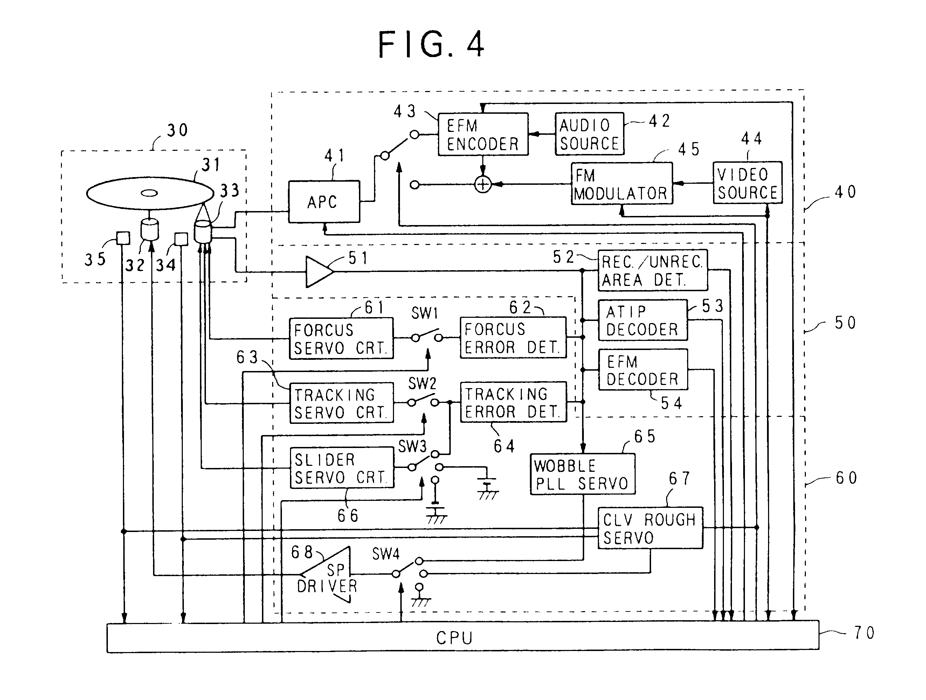

Next, description will be given which is directed to an apparatus for recording audio and video information according to CDV format onto the above-described CDV-R. FIG. 4 illustrates a construction of information recording apparatus according to an embodiment of the present invention. In FIG. 4, CDV-R recording apparatus roughly includes a disc reproducing system 30, a recording system 40, a signal processing system 50, a servo system 60 and a CPU 70. The disc reproducing system 30 includes a disc (CDV-R) 31 on which signal is recorded, a spindle motor 32 for rotating the disc, a pickup 33 for reading out signal recorded on the disc, a position sensor 34 for detecting position of the pickup 33 in the radial direction of the disc 31 and an oscillator (FG) 35 for generating signal corresponding to the rotation frequency of the disc 31. The recording system 40 includes an APC (Auto Power Control) circuit 41 for controlling recording power and reproducing power of the pickup 33, an audio source 42 for generating audio signal to be recorded, an EFM (Eight to Fourteen Modulation) encoder 43 for conducting EFM modulation onto the signal supplied from the audio source 42, a video source 44 for generating video signal to be recorded and an FM modulator 45 for conducting FM modulation onto the video signal supplied from the video source 44. The signal processing system 50 includes an RF amplifier 51 for amplifying RF signal read out by the pickup 33, a recorded/unrecorded area detecting circuit 52 for detecting recorded area and unrecorded area of the disc 31 based on the amplified RF signal, an ATIP decoder 53 for demodulating ATIP signal from wobble signal obtained from the amplified RF signal and an EFM decoder 54 for conducting EFM demodulation onto the RF signal. The servo system 60 includes a focus servo system, a tracking servo system, a slider servo system and a spindle servo system. The focus servo system includes a focus error detecting circuit 62, a switch SW1 and a focus servo circuit 61. The tracking servo system includes a tracking error detecting circuit 64, a switch SW2 and a tracking servo circuit 63. The slider servo system includes a switch SW3 and a slider servo circuit 66. The spindle servo system includes a wobble PLL servo circuit 65, a CLV rough servo circuit 67, a switch SW4 and a spindle driver 68. The CPU 70 is connected to the disc reproducing system 30, the recording system 40, the signal processing system 50 and the servo system 60, and performs total control of these systems.

Next, an operation of the CDV-R recording apparatus will be described. Firstly, basic operation of the servo systems will be described. When the disc 31 is placed at an appropriate position, the pickup 33 is transferred to the most inner circumference of the disc 31, and the focus servo system commences focus servo control. Accordingly, light spot of the light beam emitted from the pickup 33 becomes focused state. Then, rough servo control for spindle motor 32 is carried out. Namely, based on signal output from the FG 35 and positional information output from the position sensor 34, the CLV rough servo circuit 67 controls the spindle driver 68 to rotate the spindle motor 32. The position sensor 34 detects whether the pickup 33 is in the first area of the CDV-R disc 31 or in the second area thereof. The frequency of the output signal of the FG 35 is compared with a first reference frequency when the pickup 33 is in the first area, and is compared with a second reference frequency when the pickup 33 is in the second ares. The difference obtained in the comparison is operated as FG error signal. The first reference frequency corresponds to the linear velocity (1.2 - 1.4 m/s) in the first area of CDV while the second reference frequency corresponds to the linear velocity (11 - 12 m/s) in the second area of the CDV. The FG error signal indicates a difference between the reference frequency and the actual rotation frequency of the disc 31, and when the FG error signal is converged into zero, the rough servo becomes locked state. By the rough servo control described above, the spindle motor 32 rotates at the linear velocity corresponding to the first or second reference frequency.

Next, the tracking error detecting circuit 64 outputs tracking error signal based on the RF signal. The tracking servo circuit 63 makes the light beam follow the pregrooves on the recording surface of the CD-R on the basis of the tracking error signal. As has been described above, the pregroove on the recording surface of CD-R wobbles so that the center frequency of the wobbling becomes 22.05 kHz, and therefore a wobble signal is obtained from the pregroove. The wobble signal thus read is supplied to the ATIP decoder 53 and the wobble PLL servo circuit 65. Then, the switch SW4 is turned over from the CLV rough servo circuit side to the wobble PLL servo circuit side, and the wobble PLL servo is carried out so that the center frequency of wobbling becomes 22.05 kHz. When the wobble servo system is locked, the spindle motor 32 rotates so that the linear velocity becomes equal to the first or second linear velocity. In addition, the wobble signal includes FM-modulated ATIP information, and the ATIP decoder 53 supplies absolute time information and disc code information to the CPU 70.

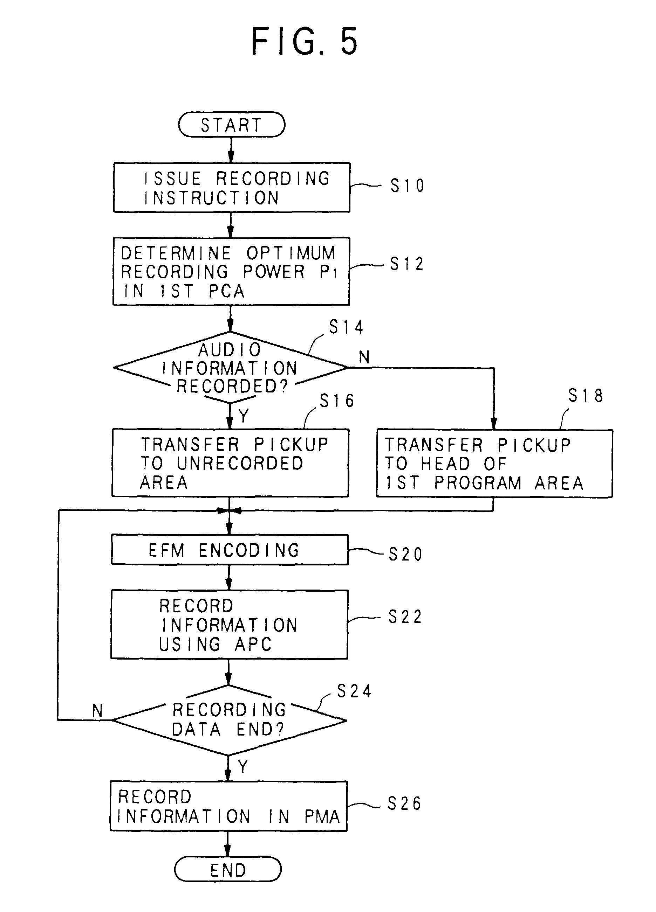

Next, an operation of recording information onto the CDV-R disc according to the embodiment of the present invention will be described. Firstly, an operation of recording audio information onto the first area according to CD-format will be described with reference to FIG. 5.

When instruction to record audio information is issued by the CPU 70 (step S10), the pickup 33 is transferred to the first PCA 22 provided at most inner circumference of the disc 31 (see. FIG. 3), and the optimum recording power $P_1$ is determined by the test recording performed there (step S12). Since the first PCA 22 is located within the first area of CDV-R, the optimum recording power $P_1$ is determined under the condition where the disc 31 is rotated at the first linear velocity (1.2 - 1.4 m/s). In addition, recording of audio information onto the first program area 25 described below is carried out at the first linear velocity. Therefore, information is accurately recorded by the optimum recording power suitable for the linear velocity. It is noted that detailed description of determining the optimum recording power $P_1$ will be omitted here because it is a known technique disclosed in the above-mentioned Japanese Patent Application.

Next, the pickup 33 is transferred to the PMA 23 in the first area, and it is judged whether audio information has already been recorded on the disc 31 or not (step S14). Specifically, the recorded/unrecorded area detecting circuit 52 detects presence or absence of information recorded on the PMA 23 based on the read RF signal. If audio information has been recorded, the ATIP decoder 53 discriminates until when in the ATIP time audio information has been recorded. If it is judged in step S14 that audio information has already been recorded, the pickup 33 is transferred to a recordable area (beginning of the unrecorded area) in the first program area 25 (step S16). Alternatively, if it is judged in step S14 that no information has been recorded, the pickup 33 is transferred to most inner circumferential area of the first program area 25, that is, to a head portion of unrecorded area (step S18).

Next, the EFM encoder 43 conducts EFM encoding onto the audio signal output from the audio source 42 on the basis of the CD-format (step S20). The EFM pulse signal is transmitted to the APC circuit 41. The APC circuit 41 controls output of the optical pickup 33 on the basis of the EFM pulse signal to record information on the surface of the disc 31 (step S22). Subsequently, it is judged whether all of the audio signal is recorded or not. If any of the audio signal still remains unrecorded, operation of steps S20 to S22 is repeated (step S24). When all of the audio signal is recorded, information relating to the history of the recorded audio signal is recorded in the PMA 23 as EFM signal (step S26), and the recording operation is ended.

As described above, according to the present invention, audio signal is recorded on the first area of the CDV-R by the optimum recording power determined by the test recording utilizing the first PCA 22 provided within the first area. As a result, the audio signal output from the audio source 42 is recorded in the first program area shown in FIG. 3 according to CD-format in conformity with the standard of CDV.

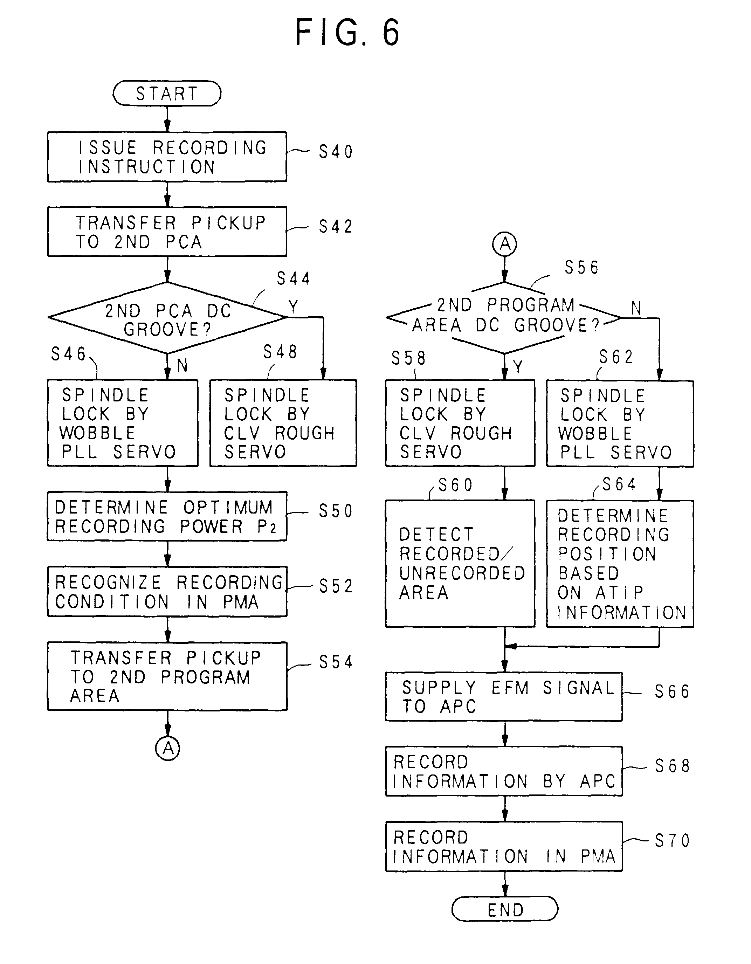

Next, an operation of recording LD-format video signal and audio signal (hereinafter simply referred to as "video signal") on the second area of CDV-R will be described with reference to FIG. 6. When the CPU 70 issues instruction to record video information (step S40), the pickup 33 is transferred to the second PCA 26 provided within the second area of CDV-R (step S42). Then, the CPU 70 judges whether the pregroove in the second PCA 26 is DC groove (non-wobbling groove) or wobbling groove (step S44). If it is judged in step S44 that the groove is DC groove, the CPU 70 controls the rotation of the spindle motor 32 using the CLV rough servo (step S46). Alternatively, if the groove is not DC groove, the CPU 70 controls the rotation of the spindle motor 32 using the wobble PLL servo (step S48). Controlled by one of these servos, the disc 31 is rotated at the second linear velocity (11 - 12 m/s). Accordingly, the optimum recording power $P_2$ is determined under rota-

tion of the second linear velocity within the second PCA 26 (step S50). Then, the CPU 70 recognizes recording condition of information by referring to the information recorded in the PMA 23 (step S52), and transfers the pickup 33 to the second program area 27 (step S54).

Subsequently, the CPU 70 discriminates whether the groove in the second program area 27 is DC groove or not (step S56). If yes, the CPU 70 leads the spindle motor 32 to locked state using the CLV rough servo (step S58). If it is DC groove, no ATIP information is recorded. Therefore, the recorded/unrecorded area detecting circuit 52 discriminates recording condition and detects unrecorded area, and the CPU 70 transfers the pickup 33 to the unrecorded area thus detected (step S60). Alternatively, if it is judged in step S56 that the groove is not DC groove, the CPU 70 leads the spindle motor 32 to locked state using the wobble PLL servo (step S64), determines recording start position by referring to the ATIP information obtained from the RF signal, and transfers the pickup 33 to the recording start position thus determined (step S66).

Subsequently, the FM modulator 45 modulates the video signal supplied from the video source 44 by FM modulation in accordance with the LD-format, mixes the FM-modulated signal with the EFM signal supplied from the EFM encoder 43, and supplies the mixed signal to the APC circuit 41 (step S66). The APC circuit 41 controls the pickup 33 based on the signal thus input, and records video signal (step S68). When the recording of the video signal is completed, the CPU 70 transfers the pickup 33 to the PMA 23 to record information relating to the history of the video signal thus recorded, and ends the recording operation (step S70).

As described above, in the second area of CDV-R, information is recorded by the optimum recording power $P_2$ determined in the test recording which is carried out in the second PCA 26 provided in the second area. By this operation, video signal output from the video source 44 and audio signal output from the audio source 42 are recorded in the second program area 27 within the second area of the CDV-R according to the LD-format which is in conformity with the standard of CDV.

When the audio signal is recorded in the first area and the video and audio signals are recorded in the second area, lead-in area and lead-out area are formed on the disc according to the CDV-format, and the disc is finalised. Details of the finalising operation, forming lead-in area and lead-out area, etc. is disclosed in Japanese Patent Publication No. 5-22992. Since the finalised disc thus produced is in conformity with CDV-format, it can be reproduced by an ordinary CDV player or an optical disc player having CDV playback capability.

**Claims**

**1.** A method of recording information on a recordable optical disc (20) by applying a light beam on the surface thereof, said disc (26-28) comprising a first recording area (22-25) and a second recording area (26-38) the first recording area comprising a test recording area, said method comprising the steps of:

rotating the disc at first linear velocity and determining a first optimum recording power for recording information on the first recording area by a test recording utilizing the test area within the first recording area;
recording information on the first recording area by the first optimum recording power while the disc is rotated at the first linear velocity; characterised by the second recording area comprising a test recording area and the steps of:
rotating the disc at second linear velocity and determining a second optimum recording power for recording information on the second recording area by a test recording utilizing the test area within the second recording area;
recording information on the second recording area by the second optimum recording power while the disc is rotated at the second linear velocity.

2. A method according to claim 1, wherein the first recording area is located inner circumferential side of the disc and the second recording area is located outer circumferential side of the disc.

3. A method according to claim 1 or 2, wherein each of the first recording area and the second recording area comprises a memory area (23) for storing information relating to history of information recorded in the recording area, respectively.

4. A method according to any one of claims 1 to 3, wherein the first recording area stores audio information according to recording format of Compact Disc, and the second recording area stores audio and video information according to recording format of Laser Disc.

5. A system comprising a recordable optical disc (20) and an apparatus for recording information on the recordable optical disc (20) by applying a light beam on the surface thereof, said disc comprising a first recording area (22-25) on which information is recorded and reproduced while the disc is rotated at a first linear velocity; and a second recording area (26-28) on which information is recorded and reproduced while the disc is rotated at a second linear velocity, characterised by:

each of the first recording area and the second recording area comprising a test recording area (22,26), respectively, and

said apparatus comprising recording power determining means (41) for determining optimum recording power for recording information on the first area by a test recording utilizing the test recording area in the first recording area, and for determining optimum recording power for recording information on the second area by a test recording utilizing the test recording area in the second recording area.

6. A system according to claim 5, wherein the first recording area is located inner circumferential side of the disc and the second recording area is located outer circumferential side of the disc.

7. A system according to claim 5, further comprising means (33) for recording information relating to history of information recorded in the respective recording areas in memory areas (23) provided in the first and the second recording areas, respectively.

8. A system according to claim 5, further comprising means (33) for recording audio information according to recording format of Compact Disc in the first recording area and recording audio and video information according to recording format of Laser Disc in the second recording area.

**Patentansprüche**

1. Verfahren zum Aufzeichnen von Information auf eine beschreibbare optische Platte (20) durch Anlegen eines Lichtstrahls an ihre Oberfläche, welche Platte (26-28) einen ersten Aufzeichnungsbereich (22-25) und einen zweiten Aufzeichnungsbereich (28-38) umfaßt, wobei der erste Aufzeichnungsbereich einen Test-Aufzeichnungsbereich umfaßt und das Verfahren die Schritte umfaßt:

Drehen der Platte mit einer ersten Lineargeschwindigkeit und Bestimmen einer ersten optimalen Aufzeichnungsleistung zum Aufzeichnen von Information an dem ersten Aufzeichnungsbereich durch eine Testaufzeichnung unter Benutzung des Testbereichs innerhalb des ersten Aufzeichnungsbereichs;
Aufzeichnen von Information an dem ersten Aufzeichnungsbereich mit der ersten optimalen Aufzeichnungsleistung, während die Platte mit der ersten Lineargeschwindigkeit gedreht wird; **dadurch gekennzeichnet, daß** der zweite Aufzeichnungsbereich einen Testaufzeichnungsbereich umfaßt, und gekennzeichnet durch die Schritte:
Drehen der Platte mit einer zweiten Lineargeschwindigkeit und Bestimmen der zweiten optimalen Aufzeichnungsleistung zum Aufzeichnen von Information an dem zweiten Aufzeichnungsbereich durch eine Testaufzeichnung mit Benutzung des Testbereichs innerhalb des zweiten Aufzeichnungsbereichs;
Aufzeichnen von Information an dem zweiten Aufzeichnungsbereich durch die zweite optimale Aufzeichnungsleistung, während die Platte mit der zweiten Lineargeschwindigkeit gedreht wird.

2. Verfahren nach Anspruch 1, bei dem der erste Aufzeichnungsbereich an der Innenumfangsseite der Platte gelegen ist und der zweite Aufzeichnungsbereich an der Außenumfangsseite der Platte gelegen ist.

3. Verfahren nach Anspruch 1 oder 2, bei dem jeweils der erste Aufzeichnungsbereich und der zweite Aufzeichnungsbereich einen Speicherbereich (23) zum Speichern von Information umfaßt, die die Historie der in dem jeweiligen Aufzeichnungsbereich aufgezeichneten Information umfaßt.

4. Verfahren nach einem der Ansprüche 1 bis 3, bei dem der erste Aufzeichnungsbereich Audioinformation gemäß dem Compact-Disc-Aufzeichnungsformat speichert und der zweite Aufzeichnungsbereich Audio- und Videoinformation gemäß dem Laser-Disc-Aufzeichnungsformat speichert.

5. System, das eine beschreibbare optische Platte (20) und eine Vorrichtung zum Aufzeichnen von Information an der beschreibbaren optischen Platte (20) durch Anlegen eines Lichtstrahls an deren Oberfläche umfaßt, wobei die Platte einen ersten Aufzeichnungsbereich (22-25) umfaßt, an welchem Information aufgezeichnet und wiedergegeben wird, während die Platte mit einer ersten Lineargeschwindigkeit gedreht wird; und einen zweiten Aufzeichnungsbereich (26-28), an welchem Information aufgezeichnet und von ihr wiedergegeben wird, während die Platte mit einer zweiten Lineargeschwindigkeit gedreht wird, **dadurch gekennzeichnet, daß**:

sowohl der erste Aufzeichnungsbereich wie auch der zweite Aufzeichnungsbereich jeweils einen Testaufzeichnungsbereich (22, 26) umfaßt, und
die Vorrichtung Aufzeichnungsleistungs-Bestimmungsmittel (41) umfaßt zum Bestimmen der optimalen Aufzeichnungsleistung zum Aufzeichnen von Information an dem ersten Bereich durch eine den Testaufzeichnungsbereich in dem ersten Aufzeichnungsbereich benutzende Testaufzeichnung und zum Bestimmen der optimalen Aufzeichnungsleistung zum Aufzeichnen von Information an dem zweiten Bereich durch eine den Testaufzeichnungsbereich in dem zweiten Aufzeichnungsbereich benutzende Testaufzeichnung.

6. System nach Anspruch 5, bei dem der erste Aufzeichnungsbereich an der Innenumfangsseite der Platte gelegen ist und der zweite Aufzeichnungsbereich an der Außenumfangsseite der Platte gelegen ist.

7. System nach Anspruch 5, das weiter Mittel (33) zum Aufzeichnen von die Historie der in den jeweiligen Aufzeichnungsbereichen betreffender Information in den jeweiligen Aufzeichnungsbereichen in Speicherbereichen (23) umfaßt, die jeweils in dem ersten bzw. zweiten Aufzeichnungsbereich vorgesehen sind.

8. System nach Anspruch 5, das weiter Mittel (33) zum Aufzeichnen von Audioinformation gemäß dem CD-Aufzeichnungsformat in dem ersten Aufzeichnungsbereich und zum Aufzeichnen von Audio- und Videoinformation gemäß dem Laser-Disc-Aufzeichnungsformat in dem zweiten Aufzeichnungsbereich umfaßt.

**Revendications**

1. Procédé d'enregistrement d'une information sur un disque optique enregistrable (20) en appliquant un faisceau lumineux sur sa surface, ledit disque (26-28) comprenant une première zone d'enregistrement (22-25) et une seconde zone d'enregistrement (26-38), la première zone d'enregistrement comprenant une zone d'enregistrement de test, ledit procédé comprenant les étapes de :

entraînement en rotation du disque à une première vitesse linéaire et détermination d'une première puissance d'enregistrement optimum pour enregistrer une information sur la première zone d'enregistrement au moyen d'un enregistrement de test qui utilise la zone de test dans la première zone d'enregistrement ;
enregistrement d'une information sur la première zone d'enregistrement au moyen de la première puissance d'enregistrement optimum tandis que le disque est entraîné en rotation à la première vitesse linéaire,

caractérisé par le fait que la seconde zone d'enregistrement comprend une zone d'enregistrement de test et par les étapes de :

entraînement en rotation du disque à une seconde vitesse linéaire et détermination d'une seconde puissance d'enregistrement optimum pour enregistrer une information sur la seconde zone d'enregistrement au moyen d'un enregistrement de test qui utilise la zone de test dans la seconde zone d'enregistrement ; et enregistrement d'une information sur la seconde zone d'enregistrement au moyen de la seconde puissance d'enregistrement optimum tandis que le disque est entraîné en rotation à la seconde vitesse linéaire.

2. Procédé selon la revendication 1, dans lequel la première zone d'enregistrement est située sur le côté circonférentiel interne du disque et la seconde zone d'enregistrement est située sur le côté circonférentiel externe du disque.

3. Procédé selon la revendication 1 ou 2, dans lequel chaque zone prise parmi la première zone d'enregistrement et la seconde zone d'enregistrement comprend respectivement une zone de mémoire (23) pour stocker une information se rapportant à l'historique d'information enregistrée dans la zone d'enregistrement.

4. Procédé selon l'une quelconque des revendications 1 à 3, dans lequel la première zone d'enregistrement stocke une information audio conformément à un format d'enregistrement de disque compact et la seconde zone d'enregistrement stocke une information audio et vidéo conformément à un format d'enregistrement de disque laser.

5. Système comprenant un disque optique enregistrable (20) et un appareil pour enregistrer une information sur le disque optique enregistrable (20) en appliquant un faisceau lumineux sur sa surface, ledit disque comprenant une première zone d'enregistrement (22-25) sur laquelle une information est enregistrée et reproduite tandis que le disque est entraîné en rotation à une première vitesse linéaire ; et une seconde zone d'enregistrement (26-28) sur laquelle une information est enregistrée et reproduite tandis que le disque est entraîné en rotation à une seconde vitesse linéaire,
     caractérisé en ce que :

     chaque zone prise parmi la première zone d'enregistrement et la seconde zone d'enregistrement comprend respectivement une zone d'enregistrement de test (22, 26) ; et
ledit appareil comprend un moyen de détermination de puissance d'enregistrement (41) pour déterminer une puissance d'enregistrement optimum pour enregistrer une information sur la première zone au moyen d'un enregistrement de test qui utilise la zone d'enregistrement de test dans la première zone d'enregistrement et pour déterminer une puissance d'enregistrement optimum pour enregistrer une information sur la seconde zone au moyen d'un enregistrement de test qui utilise la zone d'enregistrement de test dans la seconde zone d'enregistrement.

6. Système selon la revendication 5, dans lequel la première zone d'enregistrement est située sur le côté circonférentiel interne du disque et la seconde zone d'enregistrement est située sur le côté circonférentiel externe du disque.

7. Système selon la revendication 5, comprenant en outre un moyen (33) pour enregistrer une information se rapportant à l'historique d'information enregistrée dans les zones d'enregistrement respectives dans des zones de mémoire (23) prévues respectivement dans les première et seconde zones d'enregistrement.

8. Système selon la revendication 5, comprenant en outre un moyen (33) pour enregistrer une information audio conformément à un format d'enregistrement de disque compact dans la première zone d'enregistrement et pour enregistrer une information audio et vidéo conformément à un format d'enregistrement de disque laser dans la seconde zone d'enregistrement.

# FIG. 1A

# FIG. 1B

| | PCA. PMA | LEAD-IN AREA | PROGRAM AREA | LEAD-OUT AREA |
|---|---|---|---|---|
| RADIUS FROM DISC CENTER (mm) | 22.35 ~23 | 23~25 | 25~58 | 58~59 |

# FIG. 2 A

# FIG. 2 B

| RADIUS FROM DISC CENTER (mm) | LEAD-IN AREA | PROGRAM AREA | LEAD-OUT AREA |
|---|---|---|---|
| 1st RECORDING AREA (CD FORMAT) | 23 OR LESS ~25 | 25~37 (MAX) | 37~37. 5 |
| 2nd RECORDING AREA (LD FORMAT) | 37. 5~39 | 39~58 (MAX) | PROGRAM AREA +1 |

# FIG. 3

# FIG. 4

EP 0 642 122 B1

13

# FIG. 5

```
        ( START )
            │
            ▼
┌─────────────────────┐
│ ISSUE RECORDING     │──── S10
│ INSTRUCTION         │
└─────────────────────┘
            │
            ▼
┌─────────────────────┐
│ DETERMINE OPTIMUM   │──── S12
│ RECORDING POWER P1  │
│ IN 1ST PCA          │
└─────────────────────┘
            │
            ▼     S14
         ◇ AUDIO ◇                N
       ◇ INFORMATION ◇ ─────────────────────┐
         ◇ RECORDED? ◇                       │
            │ Y          S16                  │  S18
            ▼                                 ▼
┌─────────────────────┐         ┌─────────────────────┐
│ TRANSFER PICKUP     │         │ TRANSFER PICKUP     │
│ TO UNRECORDED       │         │ TO HEAD OF          │
│ AREA                │         │ 1ST PROGRAM AREA    │
└─────────────────────┘         └─────────────────────┘
            │                                 │
            ▼◄────────────────────────────────┘
┌─────────────────────┐
│ EFM ENCODING        │──── S20
└─────────────────────┘
            │
            ▼
┌─────────────────────┐
│ RECORD              │──── S22
│ INFORMATION         │
│ USING APC           │
└─────────────────────┘
            │
            ▼        S24
   N   ◇ RECORDING ◇
 ◄─────◇ DATA END? ◇
            │ Y
            ▼
┌─────────────────────┐
│ RECORD              │──── S26
│ INFORMATION IN PMA  │
└─────────────────────┘
            │
            ▼
         ( END )
```

# FIG. 6

START

ISSUE RECORDING INSTRUCTION — S40

TRANSFER PICKUP TO 2ND PCA — S42

S44
2ND PCA DC GROOVE? — Y

S46 — N
SPINDLE LOCK BY WOBBLE PLL SERVO

S48
SPINDLE LOCK BY CLV ROUGH SERVO

DETERMINE OPTIMUM RECORDING POWER $P_2$ — S50

RECOGNIZE RECORDING CONDITION IN PMA — S52

TRANSFER PICKUP TO 2ND PROGRAM AREA — S54

A

A

S56
2ND PROGRAM AREA DC GROOVE? — N

S58 — Y
SPINDLE LOCK BY CLV ROUGH SERVO

S62
SPINDLE LOCK BY WOBBLE PLL SERVO

S60
DETECT RECORDED/ UNRECORDED AREA

S64
DETERMINE RECORDING POSITION BASED ON ATIP INFORMATION

SUPPLY EFM SIGNAL TO APC — S66

RECORD INFORMATION BY APC — S68

RECORD INFORMATION IN PMA — S70

END